# DEMANDE DE BREVET EUROPEEN

(11) **EP 1 826 465 A1**
(43) Date de publication de la demande: **29.08.2007**
(21) Numéro de dépôt: 07300790.8
(22) Date de dépôt: 13.02.2007
(51) Int. Cl.: F16H 63/38

(54) **Boîte de vitesses de véhicule automobile**

(30) Priorité: 24.02.2006 FR 0650652
(71) Demandeur: PEUGEOT CITROEN AUTOMOBILES SA, 78140 Vélizy Villacoublay (FR)
(72) Inventeur: Schaeffer, Eric PEUGEOT CITROËN AUTOMOBILES 78140, 92250 La Garenne Colombes (FR)

(57) **Abrégé**

L'invention concerne une boîte de vitesses notamment du type pilotée.

La boîte de vitesses comprend un doigt de passage (24) s'engageant entre deux crosses (22, 23) d'une fourchette (18) de changement de vitesses pour déplacer cette fourchette (18) en exerçant un effort sur l'une ou l'autre de ces crosses (22, 23). Selon l'invention, elle comprend un dispositif (27) d'indexation du mouvement du doigt (24) par rapport aux crosses (22, 23), pour maintenir ce doigt (24) en appui sur l'une des crosses (32) ou en appui sur l'autre des crosses (33).

L'invention s'applique aux boîtes de vitesses séquentielles.

## Description

L'invention concerne une boîte de vitesses de véhicule automobile comprenant un doigt de passage s'engageant entre deux crosses d'une fourchette de changement de vitesses pour déplacer cette fourchette en exerçant un effort sur l'une ou l'autre de ces crosses.

Une telle boîte de vitesses comprend plusieurs pignons primaires portés par un arbre primaire en étant rigidement solidaires de celui-ci, et plusieurs pignons secondaires ainsi que plusieurs synchroniseurs portés par un arbre secondaire.

Chaque pignon secondaire est en permanence engrené dans un pignon primaire correspondant, chaque pignon secondaire étant monté rotatif sur l'arbre secondaire tout en pouvant être solidarisé en rotation à cet arbre secondaire par le synchroniseur qui lui est associé.

L'engagement d'un rapport consiste à agir sur le synchroniseur du rapport à engager pour solidariser à l'arbre secondaire le pignon secondaire correspondant.

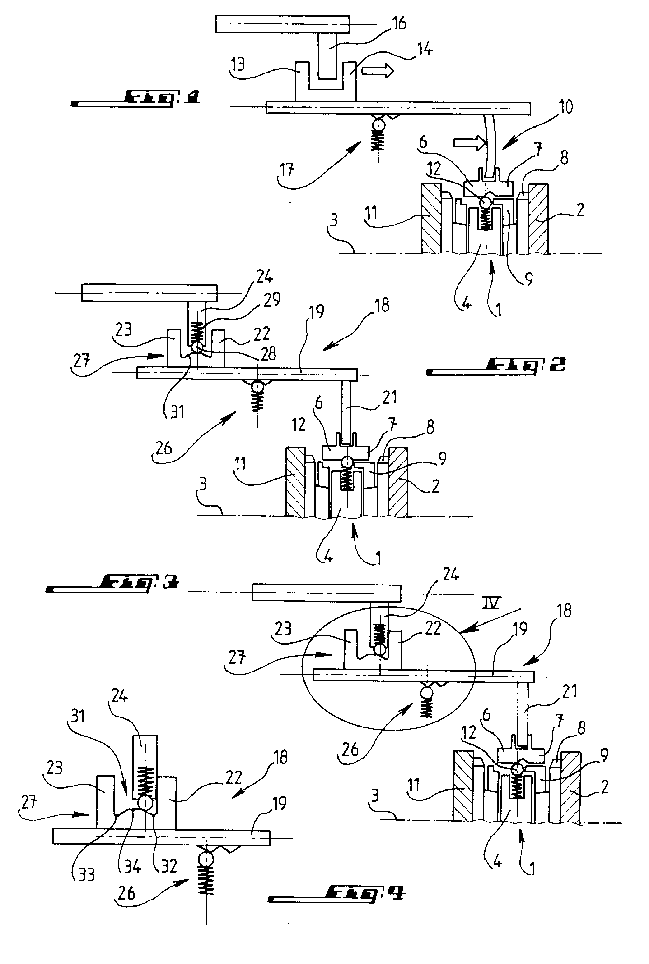

Dans la figure 1 on a représenté partiellement une telle boîte de vitesses connue de façon symbolique, celle-ci comprenant un synchroniseur 1 associé à un pignon secondaire 2, ce synchroniseur étant situé sensiblement contre ce pignon le long de l'arbre secondaire 3.

Le synchroniseur comprend un moyeu 4 rigidement solidaire de l'arbre secondaire, entouré par un manchon 6 qui est mobile en translation par rapport à ce moyeu 4 le long de l'arbre secondaire 3, tout en étant lié en rotation à ce moyeu.

Le moyeu 4 et le manchon 6 comprennent respectivement une denture externe et une denture interne complémentaires, non représentées, qui les lient en rotation tout en permettant au manchon de coulisser axialement.

Le manchon 6 comprend un bord circulaire 7 pourvu d'une denture de crabotage orientée axialement et venant s'emboîter dans une denture de crabotage latérale correspondante 8 du pignon 2 lorsque le manchon 6 est rapproché de ce pignon 2.

L'engagement du rapport correspondant au pignon secondaire repéré par 2 consiste à rapprocher le manchon 6 contre le pignon 2 pour emboîter l'une dans l'autre leurs dentures de crabotage.

Le synchroniseur comprend une bague de synchronisation 9 mettant le pignon secondaire 2 à la même vitesse de rotation que l'arbre secondaire durant le début du mouvement de rapprochement, afin de permettre le crabotage.

Cette bague de synchronisation 9 s'oppose au mouvement axial du manchon 7 tant que le pignon secondaire 2 n'a pas atteint la vitesse de l'arbre secondaire 3. En fin de synchronisation, la bague libère le manchon de sorte que sa denture de crabotage s'emboîte dans la denture de crabotage 8 du pignon secondaire 2 par simple continuation de son mouvement, cette phase étant encore appelée vol libre.

Le moyeu 4 comprend encore un billage, repéré par 12, destiné notamment à indexer les mouvements longitudinaux du manchon 7. Le synchroniseur 1 de la figure 1 est également apte à coopérer avec un autre pignon secondaire, repéré par 11, pour le solidariser à l'arbre secondaire 3, par déplacement du manchon 6 en direction opposée.

Le manchon 7 est lié en translation à une fourchette correspondante 10, qui comprend deux crosses 13 et 14 entre lesquelles un doigt de passage 16 est engagé.

Le déplacement de ce doigt 16 permet d'exercer un effort sur l'une ou l'autre des crosses 13 ou 14 afin de déplacer la fourchette 10, et donc le manchon 7, pour engager ou désengager un rapport correspondant.

La fourchette 10 a son mouvement indexé par un billage 17, qui tend à la maintenir soit dans une position neutre pour laquelle le manchon 6 n'est craboté à aucun pignon secondaire, soit dans une position de crabotage du pignon secondaire 2, soit dans une autre position de crabotage du pignon secondaire 11.

Lors d'un changement de vitesses dit en biais (par exemple lors d'un passage du rapport de 2^{ème} vers le rapport de 3^{ème}), le doigt de passage 16 est déplacé pour ramener d'abord une première fourchette en position neutre afin de désengager le rapport courant, puis il est déplacé pour être engagé entre deux crosses d'une autre fourchette afin de la déplacer pour engager le nouveau rapport.

Pour permettre les passages en biais, un jeu fonctionnel visible sur la figure 1 est prévu entre le doigt et les paires de crosses telles que 13 et 14, mais ce jeu induit un manque de précision du contrôle de position de la fourchette durant le changement de rapport.

Ce jeu perturbe le crabotage, en particulier dans le cas d'une boîte de vitesses pilotée, dans laquelle c'est un actionneur qui déplace le doigt 16 pour chaque changement de vitesses. Les variations de l'effort résistant à l'actionneur durant les passages de rapports, associés au jeu important entraînent une perte de contact entre doigt et crosse.

Durant la phase de synchronisation, la fourchette 10 est mécaniquement contrainte par le doigt 16 qui tend à la déplacer, et par la bague de synchronisation 9 qui s'oppose à ce déplacement tant que la synchronisation n'est pas effective.

Lorsque la bague de synchronisation 9 libère le manchon 7, la fourchette 10 qui a une certaine flexibilité se détend. Cette détente provoque un déplacement sensible de la fourchette 10 qui se traduit par un décollement du doigt de passage qui n'est alors plus en appui sur la crosse correspondante, ce qui correspond à la situation de la figure 1.

L'effort de détente de la fourchette 10 étant insuffisant pour provoquer en soi le crabotage du manchon 6 sur le pignon secondaire 2, ce crabotage n'a lieu qu'après rattrapage du jeu par l'actionneur.

Ainsi, dans le cas d'une boîte de vitesses pilotée, le jeu entre le doigt 16 et les crosses 13 et 14 perturbe les crabotages, ce qui se traduit par des craquements, par une détérioration des dentures de crabotage, et par un temps de changement de rapport trop important.

Il est connu, notamment du document DE-A-10055593, un dispositif d'indexation d'une boîte de vitesses à rapports synchronisés comportant un doigt de passage qui, dans une position de rapport engagé, est disposé sur deux bords d'une ouverture aménagée dans un organe d'actionnement. Le doigt comporte au moins un contact élastique produit par un élément formant ressort. Le doigt comporte un contact fixe et un contact élastique ou deux contacts élastiques.

Le but de l'invention est de proposer une boîte de vitesses manuelle pilotée ayant une conception qui pallie cet inconvénient.

A cet effet, l'invention a pour objet une boîte de vitesses de véhicule automobile conforme à l'objet de la revendication 1.

L'invention concerne également une boîte de vitesses telle que définie ci-dessus, dans laquelle l'empreinte séparant les deux crosses comprend deux cavités séparées l'une de l'autre par un méplat, chaque cavité étant contiguë à une crosse.

L'invention concerne également une boîte de vitesses telle que définie ci-dessus, dans laquelle chaque cavité de l'empreinte définit une rampe inclinée, la bille étant en appui sur une rampe inclinée lorsque le doigt est contre la crosse correspondante.

L'invention sera maintenant décrite plus en détail, et en référence aux dessins annexés qui en illustrent une forme de réalisation à titre d'exemple non limitatif.
La figure 1 représente une boîte de vitesses de l'Etat de la technique déjà décrit pendant l'engagement d'un rapport ;
La figure 2 représente une boîte de vitesses selon l'invention en position neutre ;
La figure 3 représente une boîte de vitesses selon l'invention pendant l'engagement d'un rapport ;
La figure 4 est une représentation détaillée de l'indexeur du mouvement du doigt par rapport aux crosses.

Dans la figure 2, une boîte de vitesses selon l'invention, représentée partiellement, comprend un arbre secondaire 3 portant notamment deux pignons secondaires 2 et 11 pouvant être crabotés par un même synchroniseur 1 situé entre ces pignons secondaires le long de l'arbre secondaire 3.

Ce synchroniseur 1, l'arbre secondaire 3 et les pignons 2 et 11 sont identiques à ceux de la figure 1. Le synchroniseur comprend un moyeu 4 portant un manchon 6 mobile longitudinalement et lié en rotation à ce moyeu. Ce manchon 6 comprend un bord circulaire 7 comprenant une denture de crabotage apte à s'emboîter dans une autre denture de crabotage 8 solidaire du pignon secondaire repéré par 2, lorsque le manchon 6 est rapproché du pignon 2.

Le synchronisateur 1 comprend une bague de synchronisation 9 qui met le pignon 2 à la même vitesse que l'arbre secondaire 3 en début de rapprochement du manchon 6 vers le pignon 2.

Tant que la vitesse du pignon 2 diffère de celle de l'arbre 3, la bague 9 retient le manchon 6 en l'empêchant de se déplacer longitudinalement. Dès que la vitesse du pignon 3 est satisfaisante, la bague 9 libère le manchon 6 pour lui permettre de se rapprocher complètement du pignon 2 afin de le craboter.

Le manchon 6 est déplacé par une fourchette 18 qui comprend une tige support 19 portant deux branches 21 solidaires en translation du manchon 6 qu'elles entourent partiellement, et deux crosses 22 et 23 qui sont déplacées par un doigt de guidage 24.

Le doigt 24 est mu par un actionneur, non représenté, afin de déplacer la fourchette de manière entièrement automatisée. Il peut ainsi pousser la crosse 22 pour décraboter le pignon 11 et/ou craboter le pignon 2, et il peut pousser en direction opposée la crosse 23 pour décraboter le pignon 2 et/ou craboter le pignon 11.

La tige support 19 a son mouvement longitudinal indexé par un billage 26 qui tend à maintenir la fourchette 18 soit dans une position neutre pour laquelle aucun des pignons 2 et 11 n'est craboté, soit dans une position dans laquelle le pignon 11 est craboté, soit dans une autre position pour laquelle le pignon 2 est craboté.

Un dispositif 27 indexe le mouvement du doigt 24 par rapport à la fourchette 18, de manière à assurer le maintien du doigt 24 en appui contre la crosse 22 lorsqu'il est déplacé par l'actionneur en direction de cette crosse.

Grâce à ce dispositif d'indexation 27, un jeu fonctionnel est conservé entre le doigt 24 et les crosses 22 et 23 pour faciliter le passage de rapports dits en biais, dans lesquels le doigt 24 est désengagé des crosses d'une première fourchette pour s'engager entre les crosses d'une seconde fourchette.

Avantageusement, le dispositif d'indexation 27 permet d'éviter les effets néfastes de ce jeu fonctionnel en maintenant le doigt 24 plaqué contre la crosse 22 durant tout le mouvement du manchon 6 pour craboter le pignon 2. Le contrôle de position de la fourchette est ainsi assuré malgré d'importantes variations de l'effort résistant qui est opposé à l'actionneur.

Durant la synchronisation, la fourchette 18 est contrainte entre le doigt 24 et la bague de synchronisation 9 qui s'oppose au déplacement du manchon 6, ce qui correspond sensiblement à la configuration de la figure 3. Lorsque la bague 9 libère le manchon 6, c'est-à-dire lorsque le pignon 2 a atteint la bonne vitesse, la détente de la fourchette 18 et plus particulièrement des branches 21, ne peut pas provoquer de décollement de la crosse 22. En effet, dans cette situation, la fourchette, et donc la crosse 22, est maintenue en position par rapport au doigt 24 par le dispositif d'indexation.

Le dispositif d'indexation assure aussi le maintien du doigt 24 en appui contre l'autre crosse 23 lorsque ce doigt est déplacé en direction de cette autre crosse, pour obtenir les mêmes avantages.

Comme visible en figure 2, le dispositif d'indexation 27 comprend une autre position pour maintenir le doigt 24 dans une position médiane située à mi-distance des deux crosses. Dans l'exemple des figures 2 à 4, le dispositif d'indexation 27 est un billage qui comprend une bille 28 et un ressort 29 portés par le doigt 24, le ressort 29 maintenant la bille 28 en appui contre une empreinte correspondante 31 réalisée dans la fourchette, entre les crosses 22 et 23.

Cette empreinte qui est située entre les bases des deux crosses 22 et 23 qu'elle sépare, est représentée plus en détail dans la figure 4. Elle comprend une première cavité 32 contiguë à l'embase de la crosse 22 pour recevoir la bille 28 afin de maintenir le doigt 24 en appui contre la crosse 22. Elle comprend une seconde cavité 33 contiguë à l'embase de la crosse 23 pour maintenir le doigt 24 en appui contre cette crosse 23.

Comme visible sur la figure 4, chaque cavité 32, 33, comprend principalement une rampe inclinée de telle manière que lorsque la bille 28 est en appui sur cette rampe, cette rampe exerce sur la bille, et donc sur le doigt 24 un effort tendant à plaquer ce doigt contre la crosse correspondante.

Ainsi, dans l'exemple de la figure 4, la bille qui est maintenue en appui sur la rampe de la cavité 32 par le ressort, subit de la part de cette rampe une réaction oblique, orientée vers la crosse 22 pour maintenir le doigt de passage plaqué contre cette crosse.

Ces deux cavités 32 et 33 sont séparées l'une de l'autre par un méplat 34 correspondant à la zone contre laquelle la bille 28 est en appui lorsque le doigt est en position médiane, c'est-à-dire lorsque la boîte de vitesses est au point mort.

Grâce à l'indexation du mouvement du doigt par rapport aux crosses, l'invention garantit un contact permanent du doigt et de la crosse correspondante, durant tout le déplacement de la fourchette par l'actionneur.

Cette indexation permet de conserver un jeu fonctionnel pouvant atteindre jusqu'à quatre millimètres, pour faciliter les passages dits en biais, tout en évitant les effets néfastes d'un tel jeu fonctionnel en termes de contrôle de position de la fourchette.

Elle permet ainsi un contrôle précis de la position et de la vitesse de déplacement de la fourchette, ce qui contribue à améliorer les changements de rapport en fin de synchronisation dans la phase dite de vol libre et la durée de vie des dents de crabotage.

## Revendications

1. Boîte de vitesses de véhicule automobile comprenant un doigt de passage (24) s'engageant entre deux crosses (22, 23) d'une fourchette (18) de changement de vitesses pour déplacer cette fourchette (18) en exerçant un effort sur l'une ou l'autre de ces crosses (22, 23), **caractérisé en ce qu'**elle comprend un dispositif (27) d'indexation du mouvement du doigt (24) par rapport aux crosses (22, 23), pour maintenir ce doigt (24) plaqué contre l'une ou l'autre des crosses (32)durant le déplacement.

2. Boîte de vitesses selon la revendication 1, dans laquelle le dispositif d'indexation (27) est un billage (28, 29, 31).

3. Boîte de vitesses selon la revendication 1 ou 2, dans laquelle le billage comprend une bille (28) et un ressort (29) portés par le doigt (24), le ressort (29) tendant à maintenir la bille (28) en appui sur une empreinte correspondante (31) de la fourchette (18), cette empreinte étant située entre les deux crosses (22, 23).

4. Boîte de vitesses selon la revendication 3, dans laquelle l'empreinte (31) séparant les deux crosses (22, 23) comprend deux cavités (32, 33) séparées l'une de l'autre par un méplat (34), chaque cavité (32, 33) étant contiguë à une crosse (22, 23).

5. Boîte de vitesses selon la revendication 4, dans laquelle chaque cavité (31, 32) de l'empreinte (31) définit une rampe inclinée, la bille (28) étant en appui sur une rampe inclinée lorsque le doigt (24) est contre la crosse correspondante (22, 23).
